**Europäisches Patentamt**

**European Patent Office**

**Office européen des brevets**

(19)

(11) Veröffentlichungsnummer : **0 345 863 B1**

# (12) EUROPÄISCHE PATENTSCHRIFT

(45) Veröffentlichungstag der Patentschrift :
**09.12.92 Patentblatt 92/50**

(51) Int. Cl.$^5$ : **C01B 11/02**

(21) Anmeldenummer : **89201366.5**

(22) Anmeldetag : **27.05.89**

(54) **Verfahren und Reaktor zum Erzeugen von Chlordioxid und Chlor aus Alkalichlorat.**

(30) Priorität : **10.06.88 DE 3819763**

(43) Veröffentlichungstag der Anmeldung :
**13.12.89 Patentblatt 89/50**

(45) Bekanntmachung des Hinweises auf die
Patenterteilung :
**09.12.92 Patentblatt 92/50**

(84) Benannte Vertragsstaaten :
**BE DE FR SE**

(56) Entgegenhaltungen :
**EP-A- 0 095 199**
**EP-A- 0 227 181**
**EP-A- 0 295 747**
**NL-A- 6 906 359**

(73) Patentinhaber : **METALLGESELLSCHAFT**
**AKTIENGESELLSCHAFT**
**Reuterweg 14 Postfach 10 15 01**
**W-6000 Frankfurt 1 (DE)**

(72) Erfinder : **Dworak, Rainer, Dr.**
**Heinr.-Heine Strasse 5a**
**W-6200 Wiesbaden (DE)**
Erfinder : **Kohl, Peter, Dr.**
**Birkenweg 4**
**W-6451 Neuberg (DE)**
Erfinder : **Lohrberg, Karl**
**Breslauer Strasse 1**
**W-6056 Heusenstamm (DE)**
Erfinder : **Müller, Reinhard, Dr.**
**Böhmerwaldstrasse 24**
**W-8754 Grossostheim 3 (DE)**

**Beschreibung**

Die Erfindung betrifft ein Verfahren zum Umsetzen von Alkalichlorat in wäßriger Lösung mit Säure, insbesondere Salzsäure, zum Erzeugen eines gasförmigen, Chlordioxid und Chlor enthaltenden Gemisches in einem Reaktor mit mehreren, übereinander angeordneten Reaktionsetagen, durch die die Lösung von oben nach unten fließt, wobei man die an Chlorat und Säure verarmte Lösung im unteren Reaktorbereich in einer Aufkochkammer durch indirekte Beheizung bei einer Temperatur im Bereich von 100 bis 110°C aufkocht, sowie einen Reaktor hierzu.

Dieses Verfahren und der zugehörige Reaktor sind bekannt, Einzelheiten sind im europäischen Patent 0 095 199 und in der deutschen Offenlegungsschrift 37 19 878 beschrieben. Die Umsetzung erfolgt z.B. nach der Reaktionsgleichung

$$2NaClO_3 + 4HCl = 2ClO_2 + Cl_2 + 2NaCl + 2H_2O$$

Hierbei dient HCl vorteilhafterweise als Säure und Reduktionsmittel, so daß man letzteres beim Verwenden von Salzsäure nicht mehr extra zuzugeben braucht.

Der Erfindung liegt die Aufgabe zugrunde, die Wirtschaftlichkeit des bekannten Verfahrens zu verbessern und insbesondere das Entfernen des gebildeten Wassers durch Aufkochen mit möglichst geringem Energieeinsatz durchzuführen. Beim eingangs genannten Verfahren gelingt dies erfindungsgemäß dadurch, daß man die verarmte Lösung aus der Aufkochkammer in eine Druckkammer leitet, daß man in der Druckkammer einen Druck von mindestens 1,2 bar aufrechterhält, die Lösung in der Druckkammer bei Temperaturen von 110 bis 150°C aufkocht und die beim Aufkochen in der Druckkammer entstehenden Brüden zum indirekten Beheizen durch die Aufkochkammer und/oder eine Reaktionsetage leitet.

Eine Weiterbildung der Erfindung besteht darin, daß man die Lösung in der Druckkammer indirekt mit Wasserdampf beheizt und den Wasserdampf oder das entstehende Kondensat anschließend zum indirekten Beheizen durch die Aufkochkammer und/oder eine Reaktionsetage leitet.

Ferner bietet es sich an, die in der Aufkochkammer gebildeten Brüden zum indirekten Beheizen durch mindestens eine Reaktionsetage zu leiten.

Üblicherweise herrscht in der Aufkochkammer ein Druck von etwa 1 bar, während der Druck in der Druckkammer höher ist und mindestens 1,2 bar beträgt. Diese Druckdifferenz kann man z.B. dadurch erzeugen, daß man die Druckkammer unter der Aufkochkammer anordnet, die beiden Kammern durch eine Falleitung verbindet und dadurch den hydrostatischen Druck der Lösung der Aufkochkammer in die Druckkammer leitet.

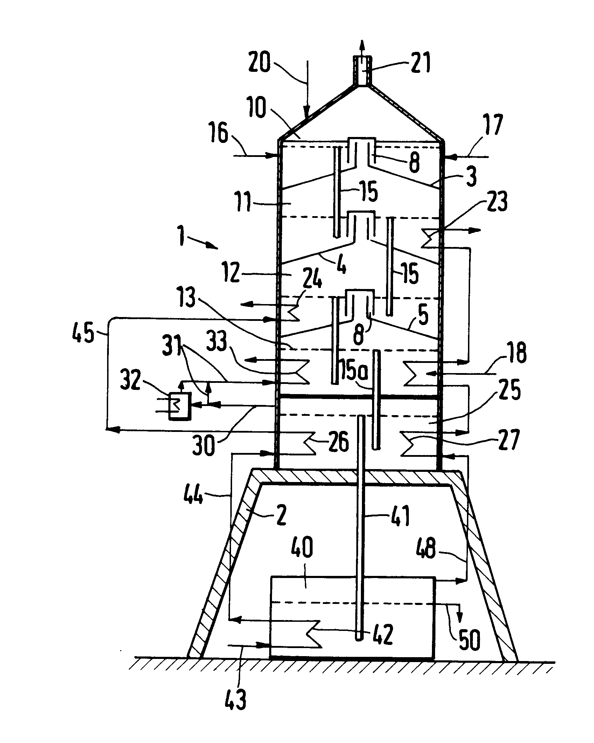

Ausgestaltungsmöglichkeiten des Verfahrens und des zugehörigen Reaktors werden mit Hilfe der Zeichnung erläutert, sie zeigt den Reaktor im Längsschnitt in schematischer Darstellung.

Der Reaktor (1), der etwa zylindrische Form hat, sitzt mit seinem Hauptteil auf einem erhöhten Podest (2). Der Reaktor weist mehrere, übereinander angeordnete Böden (3, 4, 5) auf, die etwa die Form eines umgekehrten Trichters haben. Jeder Boden besitzt einen zentralen Gasdurchlaß (8).

Jeder Boden bildet den unteren Abschluß einer Reaktionsetage, von denen es in der in der Zeichnung dargestellten Ausführungsform vier Reaktionsetagen (10, 11, 12, 13) gibt, doch ist auch eine andere Zahl Reaktionsetagen möglich. Zu jeder Reaktionsetage gehört eine Ablaufleitung (15), durch welche die Lösung von einer Etage zur darunterliegenden Etage fließen kann. Zumindest die oberste Etage weist eine oder mehrere Zulaufleitungen (16, 17) für Säure, insbesondere Salzsäure, auf. Der untersten Reaktionsetage wird Spülluft durch die Leitung (18) zugeführt.

Das umzusetzende Alkalichlorat kommt z.B. aus einer Elektrolyse und tritt durch die Leitung (20) in die oberste Reaktionsetage (10) des Reaktors (1) ein. Die Lösung weist beispielsweise pro Liter einen Gehalt von 500 g $NaClO_3$ auf. In der Zeichnung sind durch horizontale punktierte Linien die Flüssigkeitsspiegel in jeder Reaktionsetage und in den Kammern angedeutet.

Das durch die Umsetzung entstehende gasförmige Gemisch aus $ClO_2$ und $Cl_2$ strömt zusammen mit der Spülluft von Etage zu Etage aufwärts durch die jeweiligen zentralen Gasdurchlässe (8) und wird am oberen Auslaß (21) abgezogen. Um die Umsetzung zu intensivieren, sind einzelne Reaktionsetagen mit einer indirekten Beheizung (23, 24) versehen. Dabei empfiehlt es sich, in den Reaktionsetagen (10) bis (13) von oben nach unten steigende Temperaturen einzustellen. Die an Chlorat verarmte Lösung tritt schließlich durch die Abflußleitung (15a) in die Aufkochkammer (25) ein, wo sie unter einem Druck von etwa 1 bar bis zum Sieden erhitzt wird. Die hierfür nötige Wärme wird durch die indirekten Beheizungen (26, 27) eingebracht.

Die Siedetemperatur in der Aufkochkammer (25) liegt im Bereich von 100 bis 110°C, wodurch ein wasserdampfreicher Brüden entsteht. Dieser Brüden wird in der Leitung (30) abgeführt und zum Teil direkt durch die Leitung (31) oder zum Teil über einen Kühler (32) in die Rohrschlange der indirekten Beheizung (33) geleitet. Das durch Wärmeabgabe entstandene Brüdenkondensat kann in nicht dargestellter Weise zur weiteren Erwärmung in einer der darüberliegenden Reaktionsetagen verwendet werden. Der Kühler (32) dient der Temperaturregulierung der Beheizung.

Unterhalb der Aufkochkammer (25) befindet sich eine Druckkammer (40), welche mit der Aufkochkammer durch eine Falleitung (41) verbunden ist. Aus der Aufkochkammer (25) fließt die Lösung durch die Leitung (41) in die darunterliegende Druckkammer (40), wobei der hydrostatische Druck der Flüssigkeit der Kammer (25) auf der Flüssigkeit der Kammer (40) lastet. Dadurch erreicht man in der Druckkammer (40) eine Druckerhöhung, welche die Siedetemperatur der Lösung auf mindestens 110°C und bis zu 150°C erhöht. Der Höhenunterschied der Flüssigkeitsspiegel in den beiden Kammern (25) und (40) kann beliebig gewählt werden, wobei man vor allem Kostengesichtspunkte berücksichtigen wird. Höhenunterschiede von 1 bis 8 m und vorzugsweise 2 bis 6 m erscheinen zweckmäßig.

Die Druckkammer (40) weist ebenfalls eine indirekte Beheizung (42) auf, die bevorzugt mit Wasserdampf aus der Leitung (43) gespeist wird. Danach führt man das Heizmedium durch die Leitung (44) zur indirekten Beheizung (26) in der Aufkochkammer (25) und schließlich durch die Leitung (45) zur Beheizung (24) in der Reaktionsetage (12). Es ist aber auch möglich, das in der Leitung (44) aus der Druckkammer (40) kommende Heizmedium in anderer Weise in den verschiedenen Reaktionsetagen zu verwenden.

Der in der Druckkammer (40) gebildete wasserdampfreiche Brüden zieht in der Leitung (48) ab und wird zunächst zum Beheizen in der Aufkochkammer (25), anschließend als Kondensat in der Reaktionsetage (13) und schließlich in der Reaktionsetage (11) verwendet. Auch hier ist eine andere Verwendung des Brüdens und seines Kondensats zu Beheizungszwecken denkbar, es empfiehlt sich aber, den Brüden zunächst zum indirekten Beheizen in der Aufkochkammer (25) zu verwenden, da hierbei die Kondensationswärme günstig verwertet werden kann.

Die zum Verringern des Wassergehalts aufgekochte Lösung verläßt die Druckkammer (40) durch die Leitung (50) und kann z.B. zum erneuten Anreichern mit Chlorat in eine Elektrolyse zurückgeleitet werden.

Beispiel

Aus einer Chloratelektrolyse wird dem Reaktor (1) durch die Leitung (20) eine chlorathaltige Lösung in einer Gesamtmenge von 11 747 kg zugeführt. Die Lösung besteht aus 4 284 kg $NaClO_3$, 857 kg NaCl, 43 kg $Na_2Cr_2O_7$ und 6 563 kg Wasser, sie weist eine Temperatur von 40°C auf. Diese Lösung wird mit wasserhaltiger Säure, bestehend aus 1 345 kg HCl und 2 859 kg Wasser, umgesetzt. Der Reaktor (1) hat den in der Zeichnung dargestellten Aufbau mit vier Reaktionsetagen (10) bis (13). Die Säure wird über mehrere Zuführungen verteilt in die oberste Etage (10) geleitet. 1 461 kg Spülluft werden durch die Leitung (18) zugeführt und nach oben durch die Reaktionsetagen gesaugt. Das Produktgas im Auslaß (21) enthält 1 010 kg $ClO_2$, 770 kg $Cl_2$ und 172 kg $H_2O$ sowie die mitgeführte Spülluft. Aus dem System müssen also durch Verdampfen 1 850 kg Wasser entfernt werden.

Die Niveaudifferenz der Flüssigkeiten in der Druckkammer (40) und der Aufkochkammer (25) beträgt 2 m. Die Siedetemperatur der Flüssigkeit in der Aufkochkammer beträgt bei dem dort herrschenden Druck von 1 bar 105°C, in der Druckkammer liegt der Druck bei 1,25 bar und die Siedetemperatur beträgt dort 120°C. Zum Auskochen der Flüssigkeit in der Druckkammer werden durch die Leitung (43) 1 600 kg Wasserdampf von 150°C dem Wärmeaustauscher (42) zugeführt, ein Kondensat-Wasserdampf-Gemisch wird durch die Leitung (44) in die Aufkochkammer geleitet und das Kondensat wird schließlich dem Wärmeaustauscher (24) in der dritten Reaktionsetage (12) zugeführt, wo es mit einer Temperatur von 80°C abgeleitet wird.

Die in der Druckkammer gebildeten Brüden werden mit einer Temperatur von 120°C durch die Leitung (48) zur Aufkochkammer geleitet und kondensieren dort im Wärmeaustauscher (27). Dieses Kondensat wird dann noch in den Reaktionsetagen (12) und (11) zum Beheizen verwendet. Die in der Aufkochkammer (25) gebildeten Brüden werden in der in der Zeichnung dargestellten Weise zum Beheizen durch die Reaktionsetage (13) geleitet, dabei regelt der Kühler (32) die als Kondensat entfernte Menge an $H_2O$ derart, daß die Gesamt-Massenbilanz im Gleichgewicht bleibt.

## Patentansprüche

1. Verfahren zum Umsetzen von Alkalichlorat in wäßriger Lösung mit Säure, insbesondere Salzsäure, zum Erzeugen eines gasförmigen, Chlordioxid und Chlor enthaltenden Gemisches in einem Reaktor mit mehreren, übereinander angeordneten Reaktionsetagen, durch die die Lösung von oben nach unten fließt, wobei man die an Chlorat und Säure verarmte Lösung im unteren Reaktorbereich in einer Aufkochkammer durch indirekte Beheizung bei einer Temperatur im Bereich von 100 bis 110°C aufkocht, dadurch gekennzeichnet, daß man die verarmte Lösung aus der Aufkochkammer in eine Druckkammer leitet, daß man in der Druckkammer einen Druck von mindestens 1,2 bar aufrechterhält, die Lösung in der Druckkammer bei Temperaturen von 110 bis 150°C aufkocht und die beim Aufkochen in der Druckkammer entstehenden Brüden zum indirekten Beheizen durch die Aufkochkammer und-/oder eine Reaktionsetage leitet.

2. Verfahren nach Anspruch 1, dadurch gekennzeichnet, daß man die Lösung in der Druckkammer indirekt mit Wasserdampf beheizt und den Wasserdampf oder das entstehende Kondensat anschließend zum indirekten Beheizen durch die Aufkochkammer und/oder eine Reaktionsetage leitet.

3. Verfahren nach Anspruch 1 oder 2, dadurch gekennzeichnet, daß man die in der Aufkochkammer gebildeten Brüden zum indirekten Beheizen durch mindestens eine Reaktionsetage leitet.

4. Reaktor zum Umsetzen von Alkalichlorat in wäßriger Lösung mit Säure, insbesondere Salzsäure, zum Erzeugen eines gasförmigen, Chlordioxid und Chlor enthaltenden Gemisches, mit mehreren, übereinander angeordneten Reaktionsetagen, durch die die Lösung von oben nach unten fließt, wobei mindestens die oberste Etage eine Vorrichtung zur Zufuhr von Säure aufweist und im unteren Reaktorbereich eine Aufkochkammer zur indirekten Beheizung der verarmten Chloratlösung auf eine Temperatur im Bereich von 100 bis 110°C angeordnet ist, dadurch gekennzeichnet, daß unterhalb der Aufkochkammer eine unter Überdruck stehende, über eine Falleitung mit der Aufkochkammer verbundene, indirekt beheizte Druckkammer angeordnet ist und die Brüdenableitung der Druckkammer mit der indirekten Beheizung der Aufkochkammer und/oder einer Reaktionsetage verbunden ist.

5. Reaktor nach Anspruch 4, dadurch gekennzeichnet, daß die mit Wasserdampf gespeiste indirekte Beheizung der Druckkammer mit der indirekten Beheizung der Aufkochkammer und/oder einer Reaktionsetage verbunden ist.

**Claims**

1. A process of reacting alkali chlorate in an aqueous solution with an acid, particularly hydrochloric acid, to produce a gaseous mixture which contains chlorine dioxide and chlorine in a reactor that comprises a plurality of superimposed reaction stories which are flown through by the solution from top to bottom, wherein the solution in which chlorate and acid have been depleted is reboiled in the lower portion of the reactor in a reboiling chamber by an indirect heating at a temperature in the range from 100 to 110°C, characterised in that the depleted solution is conducted from the reboiling chamber to a pressure chamber, a pressure of at least 1.2 bars is maintained in the pressure chamber, the solution is reboiled in the pressure chamber at temperatures from 110 to 150°C and the vapors formed by the reboiling in the pressure chamber are passed through the reboiling chamber and/or a reaction story for effecting an indirect heating therein.

2. A process according to claim 1, characterised in that the solution is indirectly heated with steam in the pressure chamber and the steam or the resulting condensate is subsequently passed through the reboiling chamber and/or a reaction story for effecting an indirect heating therein.

3. A process according to claim 1 or 2, characterised in that the vapors formed in the reboiling chamber are conducted through at least one reaction story for effecting an indirect heating therein.

4. A reactor for reacting alkali chlorate in an aqueous solution with acid, particularly hydrochloric acid, for producing an gaseous mixture which contains chlorine dioxide and chlorine, comprising a plurality of superimposed reaction stories which are flown through by the solution from top to bottom, wherein at least the uppermost story comprises means for feeding acid and wherein a reboiling chamber for indirectly heating the depleted chlorate solution to a temperature in the range form 100 to 110°C is arranged in the lower portion of the reactor, characterised in that an indirectly heated pressure chamber which is under a superatmospheric pressure is disposed below the reboiling chamber and is connected to the reboiling chamber by a downcomer and the vapor outlet of the pressure chamber is connected to the means for indirectly heating the reboiling chamber and/or a reaction story.

5. A reactor according to claim 4, characterized in that the means for indirectly heating the pressure chamber with steam are connected to the means for indirectly heating the reboiling chamber and/or a reaction story.

**Revendications**

1. Procédé de réaction d'un chlorate de métal alcalin en solution aqueuse sur un acide, notamment sur l'acide chlorhydrique, pour produire un mélange gazeux contenant du dioxyde de chlore et du chlore, dans un réacteur ayant plusieurs étages de réaction superposés, à travers lesquels la solution s'écoule de haut en bas, qui consiste à porter la solution appauvrie en chlorate et en acide de la partie inférieure du réacteur à l'ébullition par chauffage indirect à une température comprise entre 100 et 110°C, dans une chambre d'ébullition, caractérisé en ce qu'il consiste à envoyer la solution appauvrie de la chambre d'ébullition dans une chambre sous pression, à maintenir dans la chambre sous pression, une pression d'au moins 1,2 bar, à porter la solution dans la chambre sous pression à l'ébullition à une température de 110 à 150°C et à envoyer les buées se formant dans la chambre sous pression, lors de l'ébullition, pour le chauffage indirect, dans la chambre d'ébullition et/ou dans un étage de réaction.

2. Procédé suivant la revendication 1, caractérisé en ce qu'il consiste à chauffer la solution de la chambre sous pression indirectement par la vapeur d'eau et à envoyer ensuite la vapeur d'eau ou le produit condensé formé, pour le chauffage indirect, dans la chambre d'ébullition et/ou dans un étage de réaction.

3. Procédé suivant la revendication 1 ou 2, caractérisé en ce qu'il consiste à envoyer les buées formées dans la chambre d'ébullition, pour le chauffage indirect, dans au moins un étage de réaction.

4. Réacteur de réaction de chlorate de métal alcalin en solution aqueuse sur un acide, notamment sur l'acide chlorhydrique, pour produire un mélange gazeux contenant du dioxyde de chlore et du chlore, comprenant plusieurs étages de réaction superposés, dans lesquels la solution s'écoule de haut en bas, au moins l'étage le plus élevé comportant un dispositif d'amenée d'acide, tandis qu'il est prévu, dans la partie inférieure du réacteur, une chambre d'ébullition pour le chauffage indirect de la solution de chlorate appauvrie afin de la porter à une température comprise entre 100 et 110°C, caractérisé en ce qu'endessous de la chambre d'ébullition est prévue une chambre sous pression mise en surpression, communiquant avec la chambre d'ébullition par un conduit de descente et chauffée de manière indirecte, et le conduit d'évacuation des buées de la chambre sous pression communique avec le chauffage par voie indirecte de la chambre d'ébullition et/ou avec d'un étage de réaction.

5. Réacteur suivant la revendication 4, caractérisé en ce que le chauffage indirect et alimenté en vapeur d'eau de la chambre sous pression communique avec le chauffage par indirecte de la chambre d'ébullition et/ou d'un étage de réaction.